# EUROPÄISCHE PATENTSCHRIFT

(11) **EP 2 782 199 B1**
(45) Veröffentlichungstag und Bekanntmachung des Hinweises auf die Patenterteilung: **09.05.2018**
(21) Anmeldenummer: 14160706.9
(22) Anmeldetag: 19.03.2014
(51) Int. Cl.: H02B 1/044

(54) **Gerät zur Befehls- und/oder Signalgabe mit einer Steckkupplung**
Device for giving commands and/or signals comprising a plug-in coupling
Appareil d'émission d'instructions et/ou de signaux doté d'un raccord à fiche

(30) Priorität: 20.03.2013 DE 102013102860
(43) Veröffentlichungstag der Anmeldung: 24.09.2014
(73) Patentinhaber: R. Stahl Schaltgeräte GmbH, 74638 Waldenburg (DE)
(72) Erfinder: Schulz, Berthold, 74214 Schöntal (DE); Buhl, Steffen, 74523 Schwäbisch Hall (DE)
(74) Vertreter: Rüger, Barthelt & Abel

(56) Entgegenhaltungen:
- EP-A1- 0 105 387
- EP-A1- 0 460 729
- DE-A1- 2 220 341
- DE-B- 1 298 174

## Beschreibung

Gegenstand der Erfindung ist ein Gerät zur Befehls- und/oder Signalgabe mit einem Vorsatzteil und einem Adapter, der dazu eingerichtet ist, wenigstens eine Befehls- und/oder Meldeeinrichtung aufzunehmen.

Es sind Geräte zur Befehlsgabe, wie beispielsweise Taster oder Schalter und Geräte zur Signalgabe, wie beispielsweise Meldeleuchten, bekannt, die in Bedientafeln angeordnet sind. Mit diesen können Teile einer elektrischen Installation gesteuert oder Informationen empfangen werden. Die Bedientafel kann beispielsweise als Tür eines Schaltschranks ausgebildet sein. Solche zur Befehlsgabe und/oder Signalisierung dienenden Geräte weisen jeweils ein Vorsatzteil auf, das beispielsweise einen Drucktaster und/oder eine Signallampe beinhalten kann. Das Vorsatzteil wird in eine Aussparung oder in ein Loch in der Bedientafel eingesetzt und auf der Rückseite der Bedientafel mit Hilfe einer Mutter verschraubt.

Mit dem in dem Gerät angeordneten Taster wird eine Befehlseinrichtung (Schalter) betätigt. Ein Signalgeber enthält z.B. eine Lampe oder einen Summer als Meldeeinrichtung. Die Befehls- oder Meldeeinrichtungen werden auf der Rückseite der Schalttafel mit dem Vorsatzteil verbunden.

Es ist unter Umständen wünschenswert, mehrere Schalter mit einem einzigen Vorsatzteil zu bedienen. Aus Gründen der Flexibilität ist es wünschenswert, dass einzelne Schalter von dem Vorsatzteil abgenommen und gegen andere Module ausgetauscht werden können. Deshalb können solche Geräte einen Adapter enthalten, der auf der Rückseite der Bedientafel an dem Vorsatzteil angeordnet ist. An dem Adapter können ein oder mehrere Schalter befestigt werden, was ein einfaches Austauschen derselben erlaubt.

Ein Gerät mit einem solchen Adapter ist beispielsweise aus dem Datenblatt "TECHNOR HarmAtex" bekannt, das über die Webadresse http://ex.technor.com/ abgerufen werden kann. Das auf Seite 2 dargestellte Vorsatzteil des Geräts verfügt über zwei auf gegenüberliegenden Seiten angeordnete Nuten. Der Adapter ist aus zwei Teilen aufgebaut. Er weist einen Rahmen aus Kunststoff und eine Metallklammer auf. Der Adapter kann auf das Vorsatzteil aufgesteckt werden, wobei die Metallklammer zur Arretierung mit den Nuten in Eingriff gebracht wird.

Ein weiteres Gerät ist in dem Katalog "Conrad Business 2013 - Band 1" auf Seite 618 dargestellt. Der Adapter verfügt über einen Drehschieber aus Metall, der gegenüber dem ansonsten aus Kunststoff hergestellten Adapter drehbewegbar ist. Der Drucktaster weist Steckfortsätze auf, die eine axiale Richtung festlegen und auf denen Vorsprünge angeordnet sind, die Hinterschneidungen bilden. Der Adapter wird auf den Drucktaster aufgesteckt. Der Drehschieber wird gegenüber dem übrigen Adapterteil und dem Drucktaster gedreht und so zur Ausbildung einer axialen Arretierung mit den Hinterschneidungen in Eingriff gebracht.

Vorsatzteile, Adapter und Kontaktelemente eines weiteren Geräts sind in dem Katalog "Conrad Business 2013 - Band 1" auf Seite 614 dargestellt. Der Befestigungsadapter weist einen Rahmen mit jeweils gegenüberliegenden langen und kurzen Seiten auf. An einer federnden Querverstrebung zwischen den beiden langen Seiten ist eine Rastklinke ausgebildet. Gegenüber der Rastklinke der federnden Querverstrebung ist eine zweite Rastklinke angeordnet. Das Vorsatzteil weist auf gegenüberliegenden Seiten Nuten auf. Der Befestigungsadapter wird auf das Vorsatzteil aufgesteckt und die Rastklinken auf diese Weise mit den Nuten in Eingriff gebracht.

DE 1 298 174 und DE 2 220 341 A1 offenbaren jeweils ein Gerät mit einem Vorsatzteil, einem Adapter und einer Druckfeder, wobei der Adapter mit dem Vorsatzteil mit einem Bajonettverschluss verbunden und dabei der Adapter mit dem Vorsatzteil durch die Druckfeder verspannt ist.

Aufgabe der Erfindung ist es, ein Gerät mit einem vereinfachten Arretierungsmechanismus zwischen dem Adapter und dem Vorsatzteil zu schaffen.

Diese Aufgabe wird mit einem Gerät zur Befehls- und/ oder Signalgabe nach Anspruch 1 gelöst.

Das Gerät weist ein Vorsatzteil auf. Das Vorsatzteil kann selbst der Befehls- und/oder Signalvorsatz sein oder zur Aufnahme eines solchen eingerichtet sein. Der Befehls- und/oder Signalvorsatz kann beispielsweise einen Taster und/oder ein Leuchtfenster enthalten. Das Gerät weist ferner einen Adapter und wenigstens eine Befehls- und/oder Meldeeinrichtung, im Folgenden auch synonym Schalter genannt, auf. Der Adapter ist zur Aufnahme des wenigstens einen Schalters eingerichtet. Das Gerät weist eine Steckkupplung auf, die an dem Adapter und dem Vorsatzteil ausgebildet und zur Verbindung des Adapters mit dem Vorsatzteil eingerichtet ist. Die Steckkupplung weist ein erstes Kupplungsmittel mit einem oder mehreren Steckfortsätzen und ein zweites, aufnehmendes Kupplungsmittel auf. Vorzugsweise sind keine weiteren Kupplungsmittel vorhanden. Die relative Steckbewegung des Adapters und des Vorsatzteils beim Verbinden legen eine Axialrichtung fest.

Zu der Steckkupplung gehört eine Verriegelungsvorrichtung mit einer quer, beispielsweise senkrecht, zu der Axialrichtung orientierten Verriegelungsfläche an dem ersten Kupplungsmittel. Die Verriegelungsvorrichtung weist ferner eine quer, beispielsweise senkrecht, zu der Axialrichtung orientierte, an dem zweiten Kupplungsmittel angeordnete Gegenverriegelungsfläche auf. Die Verriegelungsfläche bzw. die Gegenverriegelungsfläche ist vorzugsweise von einer quer, beispielsweise senkrecht, zu der Axialrichtung orientierten Seitenfläche eines quer, beispielsweise senkrecht, zu der Axialrichtung orientierten Verriegelungsstegs bzw. Gegenverriegelungsstegs gebildet. Die Verriegelungsfläche und die Gegenverriegelungsfläche sind derart angeordnet, dass sie durch die relative Drehung des Adapters und des Vorsatzteils zueinander um die Axialrichtung in und außer Eingriff überführbar sind. Die Flächen werden dabei gegeneinander, vorzugsweise parallel gegeneinander, verschoben. Die dafür notwendige Drehbewegung überstreicht vorzugsweise einen Winkel kleiner 90°, wobei ein Winkel von kleiner 20° besonders bevorzugt ist. Die Drehbewegung zum Verriegeln erfolgt vorzugsweise im Uhrzeigersinn.

Ein Steg, der an einem Kupplungsmittel angeordnet ist, bildet für den zugeordneten Steg des anderen Kupplungsmittels eine Hinterschneidung aus. Dadurch wird das axiale Trennen des Adapters und des Vorsatzteils gesperrt. Die Verriegelungsvorrichtung kann mehrere Verriegelungsflächen und Gegenverriegelungsflächen bzw. mehrere Verriegelungsstege und Gegenverriegelungsstege aufweisen. Vorzugsweise ist durch einen Steckanschlag auch ein zu weites Zusammenschieben in axialer Richtung nicht möglich, d.h. die Stege definieren eine gewünschte Axialposition der Kupplungsmittel mit hoher Präzision. Mit dem Steckanschlag kann ein zu weites Aufstecken bei noch nicht drehverriegeltem Adapter und Vorsatzteil und/oder bei bereits drehverriegeltem Adapter und Vorsatzteil verhindert werden. Der Steckanschlag wird durch eine erste Steckanschlagwand, die an dem ersten Kupplungsmittel angeordnet ist, und eine zweite Steckanschlagwand gebildet, die an dem zweiten Kupplungsmittel angeordnet ist.

Vorzugsweise ist der Adapter mit dem Vorsatzteil durch die Verriegelungsvorrichtung und den Steckanschlag im Rahmen der im Normalbetrieb auftretenden Kräfte ohne axiales Spiel verbunden.

Die Steckkupplung weist ferner eine Rastsicherung mit wenigstens einem Rastmittel und wenigstens einem Gegenrastmittel auf. Das Rastmittel ist an dem ersten Kupplungsmittel beispielsweise an dem Steckfortsatz angeordnet. Ein dem Rastmittel zugeordnetes Gegenrastmittel ist an dem zweiten Kupplungsmittel angeordnet. Jedem Rastmittel kann genau ein Gegenrastmittel zugeordnet sein - alternativ kann ein Rastmittel mit einem Gegenrastmittel aus einer Gruppe von Gegenrastmitteln verrastbar sein. Das Rastmittel und das Gegenrastmittel sind derart angeordnet, dass sie zur Arretierung durch relative Drehung des Adapters und des Vorsatzteils um die Axialrichtung in Eingriff überführbar sind. Die Arretierung durch die Rastsicherung sperrt eine Drehung des Adapters und des Vorsatzteils zueinander um die Axialrichtung in demjenigen Drehsinn, der zu einem Trennen der Verriegelungsfläche und der Gegenverriegelungsfläche führen würde. Durch die Rastsicherung ist eine Drehbewegung des Adapters und des Vorsatzteils um die Axialrichtung gesperrt, die zu einer ungewollten Entriegelung der Axialverriegelung führen würde. Die Sperrung bedeutet mindestens, dass zur Überwindung der Rastsicherung ein Drehmoment aufzuwenden ist, das größer ist als das im Normalbetrieb auf das Vorsatzteil und den Adapter auftretende Drehmoment, oder dass eine Rastklinke zu lösen ist.

Wenn eine Rastklinke vorgesehen ist, wobei vorzugsweise eine einzige Rastklinke vorgesehen ist, ist die Rastsicherung nicht durch Überwindung eines Lösemoments lösbar. Die Rastklinke wirkt wie eine Rastsperre, d.h. sie sperrt eine Drehbewegung entgegen der Verriegelungsdrehbewegung vollständig. Beispielsweise kann die Rastklinke so ausgebildet sein, dass diese durch eine Biegebewegung eines oder mehrerer Steckfortsätze zu entriegeln ist. Dazu kann in dem das zweite Kupplungsmittel tragenden Teil eine Entriegelungsöffnung vorhanden sein.

Das Rastmittel und/oder das Gegenrastmittel kann ein Rastvorsprung, beispielsweise ein rundlicher Rastnocken, eine Rastklinke oder ein Raststeg sein. Vorzugsweise sind das Rastmittel und/oder das Gegenrastmittel als Bestandteil, beispielsweise als Oberflächenstruktur, des ersten bzw. zweiten Kupplungsmittels, einstückig, d.h. nahtlos, mit diesem verbunden und aus dem gleichen Material, z.B. Kunststoff ausgebildet.

Das erste und/oder das zweite Kupplungsmittel können einen oder mehrere Drehanschläge aufweisen, die eine zu weite Drehbewegung zum Verriegeln verhindern. Durch einen Drehanschlag ist eine zu weite Drehung in dem Drehsinn gesperrt, der zu einem Kuppeln der Verriegelungsfläche und der Gegenverriegelungsfläche führt. Der Drehanschlag wird durch eine erste Drehanschlagwand, die an dem ersten Kupplungsmittel angeordnet ist, und eine zweite Drehanschlagwand gebildet, die an dem zweiten Kupplungsmittel angeordnet ist. Die Drehanschlagwände sind vorzugsweise parallel zur Axialrichtung orientiert. Beispielsweise weist der Adapter einen Drehanschlagsteg mit einer Drehanschlagwand auf, der in Drehrichtung hinter dem Rastmittel bzw. dem Gegenrastmittel angeordnet ist.

Das Vorsatzteil weist einen Befehls- und/oder Meldevorsatz, z.B. einen Schalter, auf oder ist zur Aufnahme eines solchen eingerichtet. Das Vorsatzteil kann zum Einbau in eine Bedien- oder Schalttafel eingerichtet sein. Dazu kann an dem Vorsatzteil ein Flansch angeordnet sein, der im eingebauten Zustand beispielsweise auf der Außenseite der Bedientafel aufliegt. Unabhängig von der Verwendung des Vorsatzteils kann das Vorsatzteil ein Außengewinde für eine Mutter aufweisen.

Der Adapter ist zur Aufnahme eines oder mehrerer Schalter eingerichtet. An dem Adapter befinden sich hierfür beispielsweise Ausnehmungen, Kanten, Löcher, Bohrungen mit Innengewinde, Klammern oder sonstige Befestigungselemente. Beispielsweise können auf einer Seite des Außenrands V-förmige Aussparungen angeordnet sein, während die gegenüberliegende Seite eine Kante aufweist. Vorzugsweise befinden sich an dem Adapter keine beweglichen Teile. Vorzugsweise ist der Adapter starr, d.h. im Rahmen seiner Funktion nicht federnd, ausgebildet.

Vorzugsweise ist das erste Kupplungsmittel an dem Vorsatzteil angeordnet, während das zweite Kupplungsteil an dem Adapter angeordnet ist. Die Zuordnung kann auch umgekehrt getroffen sein.

Das erste Kupplungsmittel ist vorzugsweise Bestandteil des Vorsatzteils und einstückig, d.h. nahtlos, mit diesem verbunden. Vorzugsweise ist auch der Adapter einstückig ausgebildet wobei das zweite Kupplungsmittel einstückiger Bestandteil des Adapters ist.

Das erste Kupplungsmittel kann mehrere, beispielsweise vier, axiale Steckfortsätze aufweisen. Sie können auf einem gemeinsamen, rechteckigen oder kreisförmigen Umfang in gleichen oder unterschiedlichen Abständen zueinander angeordnet sein. Ein Steckfortsatz kann beispielsweise als Ringsegment (oder auch als Vollring) ausgebildet sein. Ein Steckfortsatz, oder zumindest Abschnitte desselben, können eine radiale Biegefedereigenschaft aufweisen.

Das zweite Kupplungsmittel ist zur Aufnahme des oder der Steckfortsätze ausgebildet. An dem zweiten Kupplungsmittel kann beispielsweise eine runde oder kreisförmige Ausnehmung zur Aufnahme der Steckfortsätze ausgebildet sein. Das zweite Kupplungsmittel kann eine Führung aufweisen, entlang derer Teile des ersten Kupplungsmittels, beispielsweise die Steckfortsätze, in Axialrichtung verschiebbar geführt werden. Vorzugsweise ist die Aufnahme des zweiten Kupplungsmittels für das erste Kupplungsmittel so ausgebildet, dass das erste und zweite Kupplungsmittel und damit das Vorsatzteil und der Adapter quer zur Axialrichtung, jedenfalls im verriegelten Zustand, unbeweglich zueinander gehalten sind.

In einer bevorzugten Ausführungsform ist das zweite Kupplungsmittel eine Ausnehmung in einem Rahmen, der den Adapter bildet. Vorzugsweise ist der Rahmen starr und weist keine beweglichen Teile auf. Vorzugsweise sind an der die Ausnehmung begrenzenden Innenwand als Oberflächenstruktur der Innenwand ein oder mehrere Gegenverriegelungsstege und ein oder mehrere Gegenrastmittel angeordnet.

Ein Verriegelungssteg ist z.B. an einem Steckfortsatz an einem anderen Teil des ersten Kupplungsmittels angeordnet. Ein Steckfortsatz ist an einer Verbindungsstelle mit dem ihn tragenden Element, d.h. dem Vorsatzteil oder dem Adapter z.B. einstückig verbunden. Der Verriegelungssteg kann sich beispielsweise auf dem Steckfortsatz an der Verbindungsstelle oder von dieser in axialem Abstand befinden. Der Verriegelungssteg kann sich in Umfangsrichtung über den gesamten, beispielsweise als Finger, Zunge, Ringsegment oder Ring ausgebildeten, Steckfortsatz erstrecken oder lediglich über einen Teil des Umfangs.

Der Verriegelungssteg bzw. der Gegenverriegelungssteg ist vorzugsweise gegenüber dem den Verriegelungssteg bzw. den Gegenverriegelungssteg tragenden Vorsatzteil bzw. Adapter unbeweglich. Der Verriegelungssteg kann als Bestandteil, beispielsweise als Oberflächenstruktur, des ersten Kupplungsmittels oder des das erste Kupplungsmittel tragenden Vorsatzteils bzw. Adapters einstückig, d.h. nahtlos, mit diesem ausgebildet sein. Der an dem zweiten Kupplungsmittel angeordnete Gegenverriegelungssteg kann ebenfalls als Bestandteil, beispielsweise als Oberflächenstruktur, des zweiten Kupplungsmittels bzw. des Vorsatzteils oder Adapters einstückig, d.h. nahtlos, mit diesem ausgebildet sein.

Vorzugsweise sind die Stege der Verriegelungsvorrichtung und die Rastsicherung voneinander gesonderte Funktionsabschnitte. Insbesondere sind die Rastmittel oder Gegenrastmittel vorzugsweise nicht auf oder an einem Steg oder Vorsprung oder in einer Nut der Verriegelungsvorrichtung angeordnet. Vorzugsweise ist die Rastsicherung so ausgebildet, dass sie keine Kräfte in axialer Richtung aufnimmt. Vielmehr werden die Axialkräfte vorzugsweise allein von der Verriegelungsvorrichtung aufgenommen.

Das Rastmittel und/oder das Gegenrastmittel können starr, d.h. nicht beweglich oder wenigstens nicht federnd, ausgebildet und gehalten sein. Wenn das das Gegenrastmittel tragende Element starr ausgebildet ist, kann das Rastmittel beispielsweise an dem der Verbindungsstelle fernen, etwas nachgiebigen Ende des Steckfortsatzes angeordnet sein. Der Steckfortsatz kann eine Biegefeder bilden.

Das Vorsatzteil und/oder der Adapter bestehen vorzugsweise aus Kunststoff oder auch aus Metall. Vorzugsweise ist der Adapter und/oder Vorsatzteil jeweils aus einem einzigen Material, beispielsweise ganz aus Kunststoff, gefertigt.

Vorteilhafte Ausführungen der Erfindung ergeben sich aus den abhängigen Patentansprüchen und der Beschreibung. Vorteilhafte Weiterbildungen werden durch die Kombination wenigstens eines der unabhängigen Ansprüche mit den Merkmalen eines oder mehrerer Unteransprüche erhalten. Die Zeichnung ergänzt die Beschreibung. Es zeigen in schematischer Darstellung:
Figur 1 - ein Gerät zur Befehlsgabe in einer Bedientafel
Figur 2a, b - ein Vorsatzteil des Geräts der Figur 1,
Figur 3 - ein Adapter des Geräts der Figur 1,
Figur 4 - eine Rückansicht des Vorsatzteils mit aufgestecktem Adapter (a), und eine Rückansicht des Vorsatzteils mit aufgestecktem und verriegeltem Adapter,
Figur 5 - ein erfindungsgemäßes Gerät mit einem Vorsatzteil, einem Adapter und einer Befehlseinrichtung als Komplettgerät.

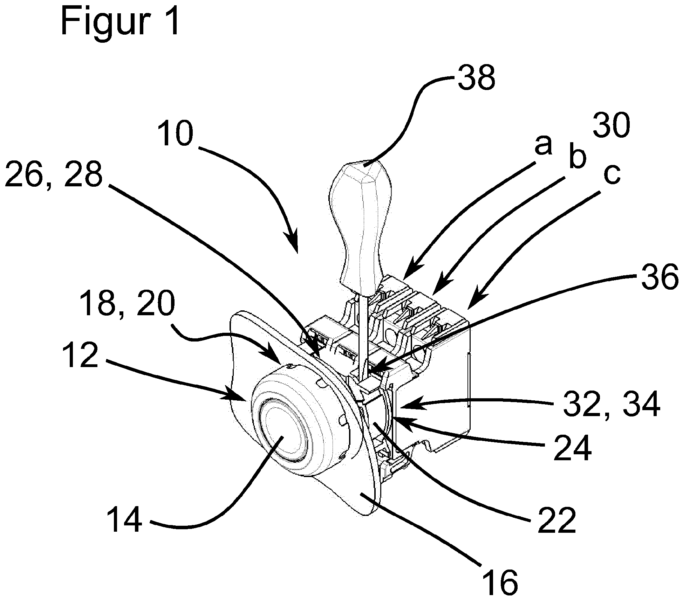

Figur 1 zeigt ein erfindungsgemäßes Gerät 10 mit einem Vorsatzteil 12 mit einem Tastereinsatzteil 14. Das Vorsatzteil 12 ist in eine Bedientafel 16 eingesetzt und mit einer Mutter 18 auf einem Außengewindes des Vorsatzteils 12 an der Bedientafel 16 befestigt. Das Vorsatzteil 12 weist dazu einen Flansch 20 auf, der auf der Vorderseite der Bedientafel 16 aufliegt. Auf das Vorsatzteil 12 ist ein Adapter 22 gesteckt. Dazu weist das Vorsatzteil 12 und der Adapter 22 eine Steckkupplung 24 auf, deren erstes Kupplungsmittel 26 am Vorsatzteil 12 und deren zweites Kupplungsmittel 28 am Adapter 22 angeordnet ist. An dem Adapter 22 sind drei Kontaktelemente 30 a, b, c befestigt. Diese weisen jeweils zwei Anschlussklemmen auf, mit Hilfe derer Leitungen einer elektrischen Installation mit den Kontaktelementen 30 verbunden werden können. Das mittlere Kontaktelement 30 b kann auch durch ein Leuchtelement ersetzt werden, dessen Leuchtmittel beispielsweise bei Betätigung des Tasters 14 aufleuchtet und den Taster 14 beleuchtet. Der Adapter 22 ist gegen eine Trennbewegung entgegen der Axialrichtung A mit Hilfe einer Verriegelungsvorrichtung 32 mit dem Vorsatzteil verriegelt und in oder entgegen der Axialrichtung spielfrei mit dem Vorsatzteil 12 verbunden. Die Verriegelung ist mit einer Rastsicherung 34 gesichert. Der Adapter 22 weist eine Entriegelungsausnehmung 36 auf. In diese ist in der Darstellung ein Schraubendreher 38 gesteckt. Mit diesem kann die Rastsicherung 34 gelöst werden, indem Druck auf einen Steckfortsatz ausgeübt wird, der daraufhin auf Grund seines Biegevermögens zurückfedert. So kann die Steckkupplung 24 zwischen dem Vorsatzteil 12 und dem Adapter 22 entriegelt werden.

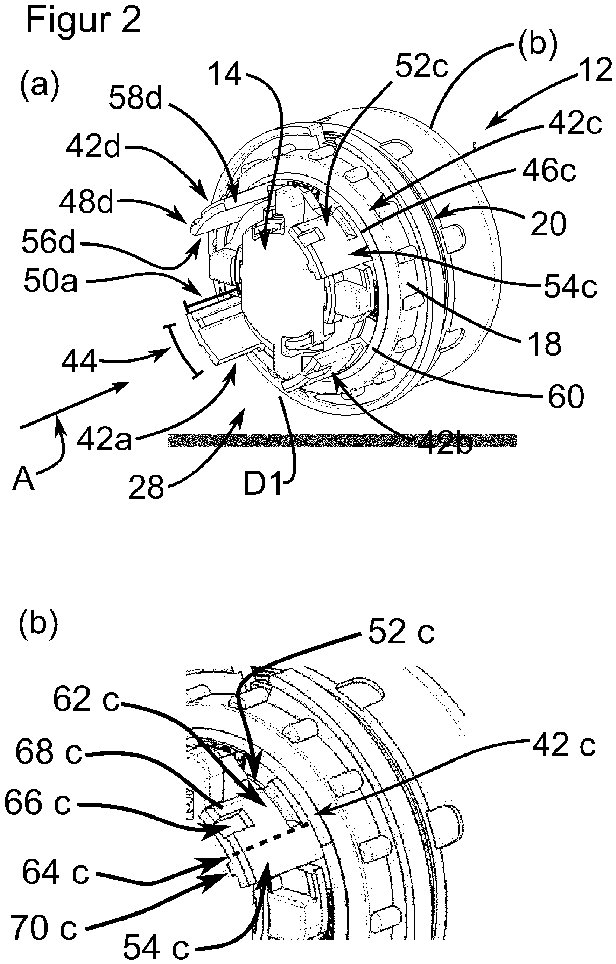

Figur 2a, b zeigt das Vorsatzteil 12 des Geräts 10 in einer perspektivischen Darstellung. Das Tastereinsatzteil 14 ist mit einer Schraube in dem Vorsatzteil 12 befestigt. Auf ein Außengewinde des Vorsatzteils 12 ist eine Mutter 18 geschraubt. Das Vorsatzteil 12 ist aus Kunststoff hergestellt.

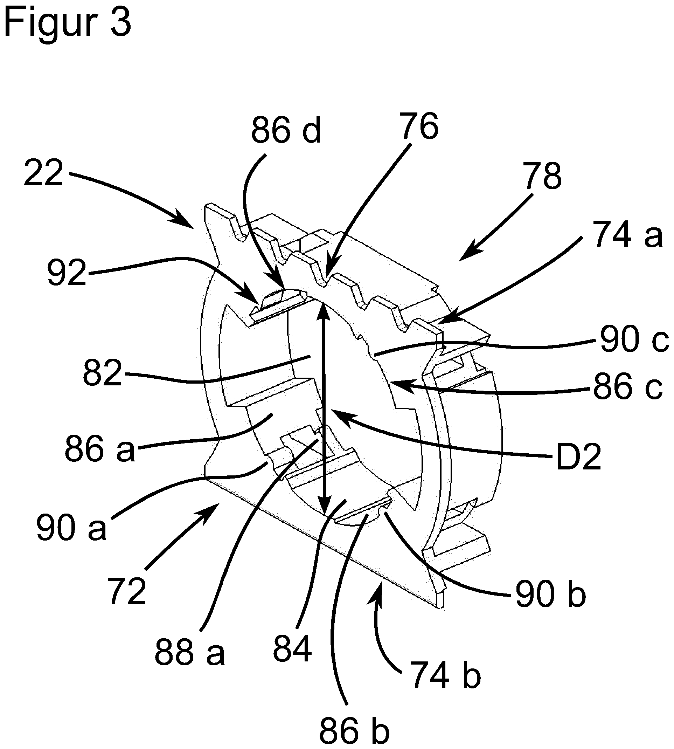

Das erste Kupplungsmittel 26 ist Bestandteil des Vorsatzteils 12, d.h. mit diesem nahtlos verbunden. Vier Steckfortsätze 42 a-d des ersten Kupplungsmittels 26 erstrecken sich entgegen der Axialrichtung A von dem Vorsatzteil 12 weg. In den Figuren 1 - 4 sind mehrfach am ersten bzw. zweiten Kupplungsmittel vorhandene Merkmale der Übersichtlichkeit halber teilweise nicht alle mit Bezugszeichen versehen. Die Steckfortsätze 42 a-d sind Ringsegmente, die auf einem gemeinsamen Umfang an einem ersten Durchmesser D1 an dem Vorsatzteil 12 angeordnet sind. Ein Steckfortsatz 42 a-d weist entlang des Umfangs eine Umfangserstreckung 44 von einem Zehntel des Gesamtumfangs auf. Ein Steckfortsatz 42 a-d weist auf einer Seite eine Verbindungsstelle 46 zu dem übrigen Teil des Vorsatzteils 12 und axial auf der gegenüberliegenden Seite ein freies Ende 48 auf. Die Länge 50 des Steckfortsatzes 42 a-d längs der axialen Richtung A von der Verbindungsstelle 46 bis zu dem freien Ende 48 ist auf den Adapter 22 abgestimmt, der in der Figur 3 dargestellt ist. Der Steckfortsatz 42 a-d ist längs einer entlang der Axialrichtung A verlaufenden Linie in zwei gedachte Abschnitte 52 a-d, 54 a-d unterteilt. Der erste Abschnitt 52 a-d ist von dem freien Ende 48 a-d gesehen an der entgegen den Uhrzeigersinn weisenden ersten Seite 56 a-d des Steckfortsatzes 42 a-d angeordnet. Der zweite Abschnitt 54 a-d ist an der in Uhrzeigersinn weisenden zweiten Seite 58 a-d des Steckfortsatzes 42 a-d angeordnet. An den Verbindungsstellen 46 a-d der Steckfortsätze 42 a-d mit dem übrigen Vorsatzteil 12 ist eine kreisrandförmige erste Steckanschlagwand 60 angeordnet.

Ein Steckfortsatz 42 a-d weist einen quer zur Axialrichtung angeordneten Verriegelungssteg 62 a-d mit einer in Axialrichtung weisenden Verriegelungsfläche auf, der in dem ersten Abschnitt 52 a-d des Steckfortsatzes 42 a-d angeordnet ist. Dies ist in Figur 2b für den Steckfortsatz 42 c stellvertretend für alle Steckfortsätze veranschaulicht. Der Verriegelungssteg 62 a-d erstreckt sich quer zu der Axialrichtung A entlang des Umfangs des ringsegmentförmigen Steckfortsatzes 42 a-d. Der Verriegelungssteg 62 a-d erstreckt sich von der ersten Seite 56 a-d des Steckfortsatzes 42 a-d entlang des Umfangs bis zur einer gedachten Grenze 64 a-d zwischen den Abschnitten 52, 54 a-d des Steckfortsatzes 42 a-d. Die erste Seite 56 a-d des Steckfortsatzes bildet eine erste Drehanschlagwand.

Ein Steckfortsatz 42 a-d weist ferner eine sich parallel zur Axialrichtung A erstreckende Axialnut 66 a-d auf. Die Axialnut 66 a-d ist an dem freien Ende 48 offen, d.h. nicht, etwa durch einen Anschlag, begrenzt. Die Axialnut 66 a-d ist in dem ersten Abschnitt 52 a-d des Steckfortsatzes 42 a-d angeordnet. Die Axialnut 66 a-d wird auf der ersten Seite 56 a-d des Steckfortsatzes 42 a-d von einem Raststeg 68 a-d des ersten Kupplungsmittels 26 begrenzt, der ein Rastmittel ist.

Ein Steckfortsatz 42, insbesondere der erste Abschnitt 52 a-d, der die Axialnut 66 a-d und den Raststeg 68 a-d aufweist, ist durch Wahl seines Materials und seiner Abmessungen wie insbesondere seiner Länge und Dicke sowie durch die einseitige Verbindung in eine Richtung quer zur Axialrichtung A biegefedernd ausgebildet. An dem Steckfortsatz 42 kann in dem ansonsten strukturfreien zweiten Abschnitt 54 a-d eine Längsverstrebung 70 a-d angeordnet sein, so dass der zweite Abschnitt 54 a-d versteift wird, während die Biegefederung des ersten Abschnitts 52 a-d jedoch weitestgehend erhalten bleibt.

Figur 3 zeigt den Adapter 22 in einer perspektivischen Ansicht. An der dargestellten Rückseite 72 des Adapters werden die Kontaktelemente befestigt. Hierfür weist der Adapter eine erste Kante 74 a und eine zweite Kante 74 b auf. Die erste Kante 74 a weist V-förmige Aussparungen 76 auf. An den Kontaktelementen angeordnete Krallen können in die V-förmigen Aussparungen 76 und um die zweite Kante 74 b greifen.

Der Adapter 22 ist in der dargestellten Ausführungsform einstückig als starrer Rahmen ohne bewegliche Teile ausgebildet. Der Adapter 22 ist aus Kunststoff hergestellt. Die Rückseite des Adapters 72 ist bei zusammengesetztem Gerät der Befehls- und/oder Meldeeinrichtung zugewandt. Außerdem weist der Adapter 22 eine Vorderseite 78 auf, die bei dem zusammengesetzten Gerät dem Vorsatzteil zugewandt ist. Die Vorderseite 78 des Adapters 22 erfüllt auch die Funktion einer zweiten Steckanschlagwand 78. Die erste Steckanschlagwand an dem Vorsatzteil und die zweite Steckanschlagwand 78 bilden den Steckanschlag, der den axialen Abstand des Vorsatzteils und des Adapters 22 festlegt. Der Rahmen 22 weist einen Durchgriff 82 von der Rückseite 72 durch die Vorderseite 78 mit einer Innenwand 84 auf, der das zweite Kupplungsmittel 28 bildet. Der Durchgriff 82 ist zur Aufnahme der Steckfortsätze 42 eingerichtet. Insbesondere ist der zweite Durchmesser D2 des Durchgriffs 82 zur Aufnahme der Steckfortsätze 42 auf den erste Durchmesser D1 abgestimmt, an dem die Steckfortsätze 42 angeordnet sind. Durch den Durchgriff 82 können außerdem bei zusammengesetztem Gerät 10 ein oder mehrere Stifte durchgreifen, die die mechanische Betätigung des Tasters an ein oder mehrere Kontaktelemente weitergeben. Von einem Leuchtelement kann Licht durch den Durchgriff 82 treten und beispielsweise den Taster beleuchten.

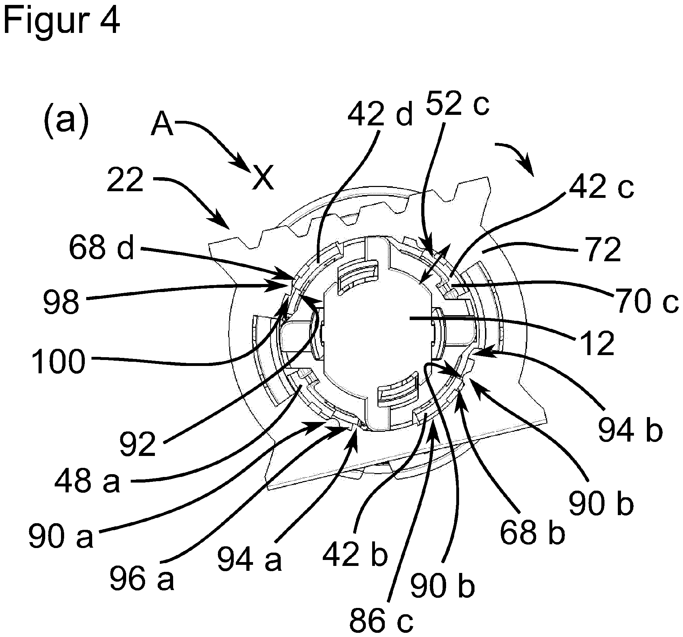

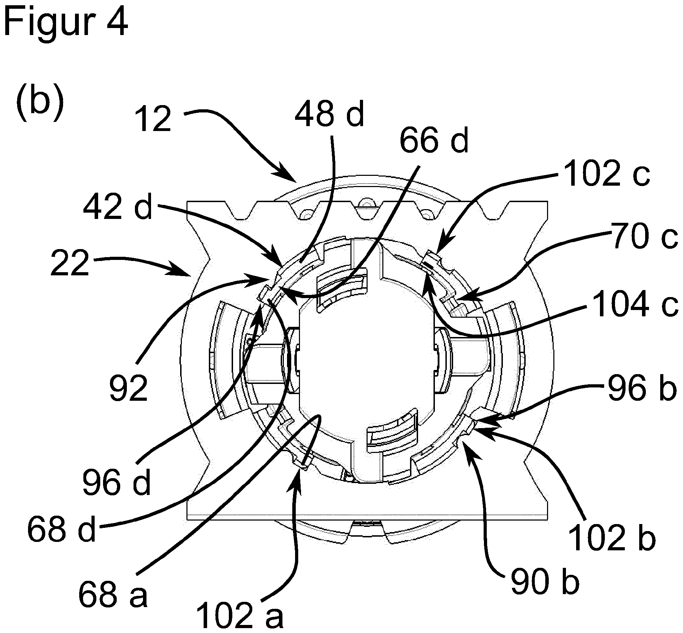

Die Innenwand 84 des Durchgriffs 82 weist Führungsabschnitte 86 a-d auf, entlang derer die Steckfortsätze 42 beim Aufstecken des Adapters 22 auf das Vorsatzteil 12 geführt werden. An der Innenwand 84 sind als deren Oberflächenstruktur vier Gegenverriegelungsstege 88 a-d mit quer zur Durchgriffsrichtung angeordneten Gegenverriegelungsflächen angeordnet. An der Innenwand 84 sind außerdem als deren Oberflächenstruktur rundliche Rastnocken 90 a-c angeordnet. Ferner ist an der Innenwand als deren Oberflächenstruktur eine Rastklinke 92 angeordnet. Schließlich sind an der Innenwand 84 als deren Oberflächenstruktur Drehanschlagstege 94 a-d angeordnet (s. Figur 4). Ein Drehanschlagsteg 94 a-d weist eine Wand auf, die eine zweite Drehanschlagwand 96 a-d bildet. Die zweite Drehanschlagwand 96 a-d erstreckt sich von der Rückseite 72 bis zur Vorderseite 78 des Adapters in axialer Richtung. Ein Gegenverriegelungssteg 88 ist in einem Abschnitt der Innenwand bei der Vorderseite 78 angeordnet, von dieser jedoch entgegen der Axialrichtung beabstandet. Der Gegenverriegelungssteg 88 erstreckt sich von der zweiten Drehanschlagwand 96 a-d des Drehanschlagstegs 94 a-d quer zur Axialrichtung entlang des Innenwandumfangs bis zu einem Führungsabschnitt 86 a-d. Eine Rastnocke 90 a-c ist ein abgerundeter Steg, der sich an der Rückseite des Adapters 72 beginnend entlang der Axialrichtung A erstreckt. Die Rastklinke 92 ist ein Rastzahn mit in Drehverriegelungsrichtung schräg ansteigendem Zahnrücken 98 und steil abfallender Zahnbrust 100. Die Rastklinke 92 erstreckt sich an der Rückseite des Adapters 22 beginnend entlang der Axialrichtung A. Eine Drehanschlagwand 96 a-d und ein Rastnocken 90 a-c bzw. eine Rastklinke 92 bilden eine Rastnut 102. Rastnocken 90 bzw. Rastklinken 92 sind Gegenrastmittel des zweiten Kupplungsmittels 28. Der Adapter 22 bzw. die Innenwand 84 sind das tragende Element des Gegenrastmittels.

In Figur 4 ist dargestellt, wie das erste Kupplungsmittel und das zweite Kupplungsmittel zusammenarbeiten. Figur 4a zeigt den auf die Steckfortsätze 42 a-d entlang den Führungsabschnitten 86 a-d aufgesteckten Adapter 22. Die freien Enden 48 a-d der Steckfortsätze 42 a-d reichen bis zur Rückseite 72 des Adapters 22. Ein zu weites Aufstecken wird durch die erste Steckanschlagwand des Vorsatzteils und die zweite Steckanschlagwand des Adapters begrenzt.

Die Gegenverriegelungsstege werden mit den Verriegelungsstegen durch relative Drehung des Adapters 22 in Bezug auf das Vorsatzteil 12 im Uhrzeigersinn, wie in der Figur 4a durch einen Pfeil angedeutet, in Eingriff gebracht. Der Gegenverriegelungssteg und der Verriegelungssteg sind an dem Adapter 22 an jedem Steckfortsatz 42 a-d jeweils so axial angeordnet, dass sich ein entgegen die Axialrichtung A möglichst spielfreie Kupplung des Adapters 22 und des Vorsatzteils 12 ergibt. Die Axialrichtung A zeigt wie mit einem X angedeutet in die Papierebene der Zeichnung. Bei der Drehung rutschen die Raststege 68 a-d der Steckfortsätze 42 a-d über die rundlichen Rastnocken 90 a-c bzw. den Rücken 98 der Rastklinke 92. Durch die Längsverstrebungen 70 a-d und durch die asymmetrische Kraftausübung auf Grund der Anordnung des Rastmittels 68 a-d in dem ersten Abschnitt 52 a-d geben insbesondere die ersten Abschnitte 52 a-d der Steckfortsätze 42 a-d quer zu der Axialrichtung A federnd nach, wie mit eine Doppelpfeil stellvertretend für den Steckfortsatz 42 c veranschaulicht. Die Verriegelungsdrehung wird durch die zweite Drehanschlagwand 96 a-d begrenzt.

Ein Raststeg 68 a-d ist bei auf dem Vorsatzteil 12 aufgestecktem und rastgesichertem Adapter 22 zwischen der Rastnocke 90 a-c bzw. Rastklinke 92 und der zweiten Drehanschlagwand 96 a-d angeordnet, die jeweils eine Rastnut 102 a-d bilden. Die Breite 104 a-d des Raststegs 68 a-d ist vorzugsweise so auf den umfänglichen Abstand zwischen der Rastnocke 90 a-c bzw. der Rastklinke 92 und der zweiten Drehanschlagwand 96 a-d abgestimmt, dass das Vorsatzteil 12 und der Adapter 22 bei in der Rastnut 102 a-d angeordnetem Raststeg 68 a-d zueinander drehspielfrei sind. Die Rastnocken 90 a-c jedenfalls aber die Rastklinke 92 verhindern zusammen mit den entsprechenden Raststegen 68 a-d in der in Figur 4b dargestellten Anordnung des Adapters 22 auf dem Vorsatzteil 12 eine ungewollte Entrastdrehbewegung des Adapters 22 in Bezug auf das Vorsatzteil 12. Die Rastsicherung, d.h. insbesondere der Rastnocken 90 a-c bzw. die Rastklinke 92, nimmt auf Grund des offenen Endes der Axialnut 66 a-d an dem Ende 48 a-d des Steckfortsatzes 42 a-d keinerlei Kräfte entgegen der axialen Richtung A auf. Kräfte entgegen der Axialrichtung A werden ausschließlich von den einander in Eingriff befindlichen Verriegelungsstegen 62 und Gegenverriegelungsstegen aufgenommen. Die Rastsicherung kann gelöst werden, indem der Steckfortsatz 42 d, in den die Rastklinke 92 eingreift, von der Rastklinke 92 weggebogen wird. Diese Lösebewegung kann wie in Figur 1 veranschaulicht beispielsweise mit einem Schraubendreher 38 oder dergleichen ausgeführt werden, der in eine Entriegelungsausnehmung 36 eingreift, die in dem Adapter 22 angeordnet ist und den Steckfortsatz 42 d von außen zugänglich macht. Die Rastsicherung eines Geräts, das sich von der Ausführungsform gemäß Figur 4 dadurch unterscheidet, dass die Rastklinke 92 durch einen runden Rastnocken 90 ersetzt ist, kann beispielsweise dazu eingerichtet sein, durch eine Entrastdrehbewegung unter Überwindung eines Lösemoments lösbar zu sein.

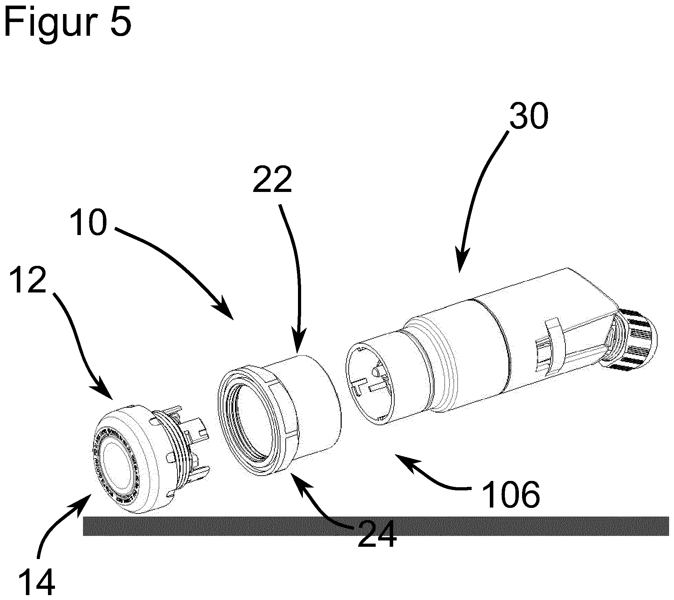

Figur 5 zeigt eine andere Ausführungsform eines erfindungsgemäßen Geräts 10 mit einem Vorsatzteil 12, einem Adapter 22 und einer Befehlseinrichtung 30, wobei die Befehlseinrichtung 30 als Komplettgerät 30 ausgebildet ist, das die mit dem Taster 14 zu bedienende elektrische Installation enthält. Das Gerät 10 weist neben der Steckkupplung 24 zur Verriegelung des Vorsatzteils 12 mit dem Adapter 22 eine weitere Verbindungsvorrichtung 106 auf, mit der der Adapter 22 und das Komplettgerät 30 verbunden werden können.

### Bezugszeichenliste:

| | |
|---|---|
| 10 | Gerät |
| 12 | Vorsatzteil |
| 14 | Tastereinsatzteil |
| 16 | Bedientafel |
| 18 | Mutter |
| 20 | Flansch |
| 22 | Adapter |
| 24 | Steckkupplung |
| 26 | Erstes Kupplungsmittel |
| 28 | Zweites Kupplungsmittel |
| 30 | Befehls- bzw. Meldeeinrichtungen/Komplettgerät |
| 32 | Verriegelungsvorrichtung |
| 34 | Rastsicherung |
| 36 | Entriegelungsausnehmung |
| 38 | Schraubendreher |
| 42 a-d | Steckfortsätze |
| 44 a-d | Umfangserstreckungen |
| 46 a-d | Verbindungsstellen |
| 48 a-d | Freie Enden |
| 50 a-d | Längen der Steckfortsätze |
| 52 a-d | Erste Abschnitte |
| 54 a-d | Zweite Abschnitte |
| 56 a-d | Erste Seiten |
| 58 a-d | Zweite Seiten |
| 60 | Erste Steckanschlagwand |
| 62 a-d | Verriegelungsstege |
| 64 a-d | Grenze zwischen dem ersten und zweiten Abschnitt |
| 66 a-d | Axialnuten |
| 68 a-d | Raststege |
| 70 a-d | Längsverstrebungen |
| 72 | Rückseite des Adapters |
| 74 a,b | Erste und zweite Kante |
| 76 | V-förmige Aussparung |
| 78 | Vorderseite d. Adapters/ zweite Steckanschlagwand |
| 82 | Durchgriff |
| 84 | Innenwand |
| 86 a-d | Führungsabschnitte |
| 88 a-d | Gegenverriegelungsstege |
| 90 a-c | Rastnocken |
| 92 | Rastklinke |
| 94 a-d | Drehanschlagsteg |
| 96 a-d | Zweite Drehanschlagwände |
| 98 | Zahnrücken |
| 100 | Zahnbrust |
| 102 a-d | Rastnuten |
| 104 a-d | Breiten der Raststege |
| 106 | Verbindungsvorrichtung |
| A | Axialrichtung |
| D1 | Erster Durchmesser |
| D2 | Zweiter Durchmesser |

## Patentansprüche

1. Gerät zur Befehls- und/oder Signalgabe (10)
mit einem Vorsatzteil (12),
mit einem Adapter (22),
mit wenigstens einer Befehls- und/oder Meldeeinrichtung (30),
mit einer Steckkupplung (24) zur Verbindung des Adapters (22) mit dem Vorsatzteil (12), wobei die Steckkupplung (24) ein erstes Kupplungsmittel (26) mit einem Steckfortsatz (42) und ein zweites Kupplungsmittel (28) aufweist, wobei die Steckkupplung (24) eine Axialrichtung (A) festlegt,
mit einer Verriegelungsvorrichtung (32) mit einer quer zu der Axialrichtung (A) orientierten, an dem ersten Kupplungsmittel (26) angeordneten Verriegelungsfläche (62) und einer quer zu der Axialrichtung (A) orientierten, an dem zweiten Kupplungsmittel (28) angeordneten Gegenverriegelungsfläche (88),
wobei die Verriegelungsfläche (62) und die Gegenverriegelungsfläche (88) derart angeordnet sind, dass sie durch relative Drehung des Adapters (22) und des Vorsatzteils (12) zueinander um die Axialrichtung (A) in und außer Eingriff überführbar sind,
und mit einer Rastsicherung (34) mit einem an dem Steckfortsatz (42) angeordneten Rastmittel (68) und ein dem Rastmittel (68) zugeordnetes Gegenrastmittel (90, 92),
wobei das Rastmittel (68) und das Gegenrastmittel (90, 92) durch relative Drehung des Adapters (22) und des Vorsatzteils (12) zueinander um die Axialrichtung (A) zur Arretierung in Eingriff bringbar sind.

2. Gerät nach Anspruch 1, **dadurch gekennzeichnet, dass** die Verriegelungsfläche (62) und die Gegenverriegelungsfläche (88) der Verriegelungsvorrichtung (32) durch einen quer zu der Axialrichtung (A) orientierten, an dem ersten Kupplungsmitteln (26) angeordneten Verriegelungssteg (62) bzw. einen quer zu der Axialrichtung (A) orientierten, an dem zweiten Kupplungsmittel (28) angeordneten Gegenverriegelungssteg (88) gebildet sind.

3. Gerät (10) nach einem der vorherigen Ansprüche,
**dadurch gekennzeichnet, dass** das Element (84, 22), welches das Rastmittel (68) oder das Gegenrastmittel (90, 92) trägt, starr ausgebildet ist.

4. Gerät (10) nach einem der vorherigen Ansprüche mit einem federnden Steckfortsatz (42) mit einem freien Ende (48), **dadurch gekennzeichnet, dass** das Rastmittel (68) an dem freien Ende (48) angeordnet ist.

5. Gerät (10) nach einem der vorhergehenden Ansprüche, **dadurch gekennzeichnet, dass** ein Rastmittel und/oder ein Gegenrastmittel ein Raststeg (68) oder ein rundlicher Rastnocken (90) oder eine Rastklinke (92) ist.

6. Gerät (10) nach einem der vorherigen Ansprüche,
**dadurch gekennzeichnet**, das die Rastsicherung (34) keine Kräfte in axialer Richtung (A) aufnimmt.

7. Gerät (10) nach einem der vorherigen Ansprüche, wobei der Verriegelungssteg (62) an der Steckkupplung (24), vorzugsweise an dem Steckfortsatz (42) angeordnet ist.

8. Gerät (10) nach einem der vorhergehenden Ansprüche,
**dadurch gekennzeichnet, dass** das Kupplungsmittel (26, 28) Bestandteil des Adapters (22) ist.

9. Gerät (10) nach einem der vorhergehenden Ansprüche,
**dadurch gekennzeichnet, dass** ein Verriegelungssteg (62) oder ein Gegenverriegelungssteg (88) und ein Rastmittel oder ein Gegenrastmittel Bestandteil der Adapters (22) sind.

10. Gerät (10) nach einem der vorhergehenden Ansprüche,
**dadurch gekennzeichnet, dass** das der Adapter (22) oder das Vorsatzteil (12) eine Entriegelungsausnehmung (36) aufweist.

11. Gerät (10) nach einem der vorhergehenden Ansprüche,
**dadurch gekennzeichnet, dass** die Steckkupplung (24) einen Steckanschlag (60, 72) aufweist.

12. Gerät (10) nach einem der vorhergehenden Ansprüche,
**dadurch gekennzeichnet, dass** die Steckkupplung (24) einen Drehanschlag (56, 96) aufweist.

13. Gerät (10) nach einem der vorherigen Ansprüche mit einem federnden Steckfortsatz (42) und einer Rastsicherung (34) mit einer Rastklinke (92) und einem zugehörigen Rastmittel (68) oder Gegenrastmittel, wobei die Rastklinke (92) und das zugehörige Rastmittel (68) oder Gegenrastmittel durch eine Biegebewegung des Steckfortsatzes (42) außer Eingriff bringbar sind.

14. Gerät (10) nach einem der vorherigen Ansprüche mit einem Steckfortsatz (42) mit einem ersten Abschnitt (52) und einem zweiten Abschnitt (54), wobei der Steckfortsatz (42) eine in dem zweiten Abschnitt (54) entlang der Axialrichtung (A) angeordnete Längsverstrebung (70) aufweist, die dazu eingerichtet ist, den Steckfortsatz (42) in dem zweiten Abschnitt (54) zu versteifen.

15. Gerät (10) nach einem der vorherigen Ansprüche,
**dadurch gekennzeichnet, dass** die Rastsicherung (34) rundliche Rastnocken (90) aufweist, wobei jeder Rastnocken (90) mit einem Raststeg (68) und/oder Rastnocken (90) in Eingriff bringbar ist.

## Claims

1. Device (10) for giving commands and/or signals,
with an attachment part (12),
with an adapter (22),
with at least one command and/or signalling device (30),
with a plug-in coupling (24) for connecting the adapter (22) to the attachment part (12), wherein the plug-in coupling (24) has a first coupling means (26) with a plug-in extension (42) and a second coupling means (28), wherein the plug-in coupling (24) establishes an axial direction (A),
with a locking device (32) with a locking face (62) oriented transversely to the axial direction (A) and arranged on the first coupling means (26), and a counter locking face (88) oriented transversely to the axial direction (A) and arranged on the second coupling means (28),
wherein the locking face (62) and the counter locking face (88) are arranged such that they can be brought into and out of engagement by relative twist of the adapter (22) and the attachment part (12) relative to each other about the axial direction (A),
and with a catch lock (34) with a catch means (68) arranged on the plug-in extension (42) and a counter catch means (90, 92) assigned to the catch means (68),
wherein the catch means (68) and the counter catch means (90, 92) can be brought into engagement for locking by a relative twist of the adapter (22) and the attachment part (12) relative to each other about the axial direction (A).

2. Device according to claim 1, **characterised in that** the locking face (62) and the counter locking face (88) of the locking device (32) are formed by a locking web (62) oriented transversely to the axial direction (A) and arranged on the first coupling means (26) and by a respective counter locking web (88) oriented transversely to the axial direction (A) and arranged on the second coupling means (28).

3. Device (10) according to one of the preceding claims, **characterised in that** the element (84, 22) which carries the catch means (68) or the counter catch means (90, 92) is formed so as to be rigid.

4. Device (10) according to any of the preceding claims, with a sprung plug-in extension (42) with a free end (48), **characterised in that** the catch means (68) is arranged on the free end (48).

5. Device (10) according to any of the preceding claims, **characterised in that** a catch means and/or a counter catch means is a catch web (68) or a round catch cam (90) or a catch pawl (92).

6. Device (10) according to any of the preceding claims, **characterised in that** the catch lock (34) does not receive any forces in the axial direction (A).

7. Device (10) according to any of the preceding claims, **characterised in that** the locking web (62) is arranged on the plug-in coupling (24), preferably on the plug-in extension (42).

8. Device (10) according to any of the preceding claims, **characterised in that** the coupling means (26, 28) is part of the adapter (22).

9. Device (10) according to any of the preceding claims, **characterised in that** a locking web (62) or a counter locking web (88), and a locking means or a counter locking means, are part of the adapter (22).

10. Device (10) according to any of the preceding claims, **characterised in that** the adapter (22) or the attachment part (12) comprises a release recess (36).

11. Device (10) according to any of the preceding claims, **characterised in that** plug-in coupling (24) comprises an insertion stop (60, 72).

12. Device (10) according to any of the preceding claims, **characterised in that** the plug-in coupling (24) comprises a rotation stop (56, 96).

13. Device (10) according to any of the preceding claims, with a sprung plug-in extension (42) and a catch lock (34) with a catch pawl (92) and an associated catch means (68) or counter catch means, wherein the catch pawl (92) and the associated catch means (68) or counter catch means can be brought out of engagement by a bending movement of the plug-in extension (42).

14. Device (10) according to any of the preceding claims, with a plug-in extension (42) with a first portion (52) and a second portion (54), wherein the plug-in extension (42) has a longitudinal brace (70) which is arranged in the axial direction (A) in the second portion (54) and is configured to stiffen the plug-in extension (42) in the second portion (54).

15. Device (10) according to any of the preceding claims, **characterised in that** the catch lock (34) has round catch cams (90), wherein each catch cam (90) can be brought into engagement with a catch web (68) and/or catch cam (90).

## Revendications

1. Appareil d'émission d'instructions et/ou de signaux (10), comprenant un élément rapporté (12),
comprenant un adaptateur (22),
comprenant au moins un dispositif d'instructions et/ou de signalisation (30),
comprenant un raccord enfichable (24) destiné à relier l'adaptateur (22) à l'élément rapporté (12), le raccord enfichable (24) présentant un premier moyen d'accouplement (26), doté d'un prolongement d'enfichage (42), et un deuxième moyen d'accouplement (28), le raccord enfichable (24) définissant une direction axiale (A),
comprenant un dispositif de verrouillage (32) doté d'une surface de verrouillage (62), disposée sur le premier moyen d'accouplement (26) et orientée perpendiculairement à la direction axiale (A), et d'une surface de verrouillage conjuguée (88) disposée sur le deuxième moyen d'accouplement (28) et orientée perpendiculairement à la direction axiale (A),
la surface de verrouillage (62) et la surface de verrouillage conjuguée (88) étant disposées de manière telle qu'elles puissent être amenées en prise et hors de prise par une rotation relative de l'adaptateur (22) et de l'élément rapporté (12), l'un par rapport à l'autre,
et comprenant un moyen d'arrêt à encliquetage (34) doté d'un moyen d'encliquetage (68), disposé sur le prolongement d'enfichage (42), et d'un moyen d'encliquetage conjugué (90, 92) associé au moyen d'encliquetage (68),
le moyen d'encliquetage (68) et le moyen d'encliquetage conjugué (90, 92) pouvant être amenés en prise pour assurer le blocage, par rotation relative de l'adaptateur (22) et de l'élément rapporté (12), l'un par rapport à l'autre.

2. Appareil selon la revendication 1, **caractérisé en ce que** la surface de verrouillage (62) et la surface de verrouillage conjuguée (88) du dispositif de verrouillage (32) sont constituées respectivement d'une paroi de verrouillage (62), disposée sur le premier moyen d'accouplement (26) et orientée perpendiculairement à la direction axiale (A), et d'une paroi de verrouillage conjuguée (88) disposée sur le deuxième moyen d'accouplement (28) et orientée perpendiculairement à la direction axiale (A).

3. Appareil (10) selon une des revendications précédentes, **caractérisé en ce que** l'élément (84, 22) qui porte le moyen d'encliquetage (68) ou le moyen d'encliquetage conjugué (90, 92) est réalisé de façon rigide.

4. Appareil (10) selon une des revendications précédentes, comprenant un prolongement d'enfichage (42) élastique doté d'une extrémité libre (48), **caractérisé en ce que** le moyen d'encliquetage (68) est placé sur l'extrémité libre (48).

5. Appareil (10) selon une des revendications précédentes, **caractérisé en ce qu'**un moyen d'encliquetage et/ou un moyen de verrouillage conjugué est une paroi d'encliquetage (68) ou un ergot d'encliquetage (90) arrondi ou un cran d'arrêt (92).

6. Appareil (10) selon une des revendications précédentes, **caractérisé en ce que** le moyen d'arrêt à encliquetage (34) n'absorbe pas de forces dans la direction axiale (A).

7. Appareil (10) selon une des revendications précédentes, dans lequel la paroi de verrouillage (62) du raccord enfichable (24) est de préférence disposée sur le prolongement d'enfichage (42).

8. Appareil (10) selon une des revendications précédentes, **caractérisé en ce que** le moyen d'accouplement (26, 28) fait partie intégrante de l'adaptateur (22).

9. Appareil (10) selon une des revendications précédentes, **caractérisé en ce qu'**une paroi de verrouillage (62) ou une paroi de verrouillage conjuguée (88) et un moyen d'encliquetage ou un moyen d'encliquetage conjugué font partie intégrante de l'adaptateur (22).

10. Appareil (10) selon une des revendications précédentes, **caractérisé en ce que** l'adaptateur (22) ou l'élément rapporté (12) présente un évidement de déverrouillage (36).

11. Appareil (10) selon une des revendications précédentes, **caractérisé en ce que** le raccord enfichable (24) présente une butée d'enfichage (60, 72).

12. Appareil (10) selon une des revendications précédentes, **caractérisé en ce que** le raccord enfichable (24) présente une butée de rotation (56, 96).

13. Appareil (10) selon une des revendications précédentes, comprenant un prolongement d'enfichage (42) élastique et un moyen d'arrêt à encliquetage (34) doté d'un cran d'arrêt (92) et d'un moyen d'encliquetage (68) associé ou d'un moyen d'encliquetage conjugué, où le cran d'arrêt (92) et le moyen d'encliquetage (68) associé ou le moyen d'encliquetage conjugué peuvent être amenés hors de prise par un mouvement de flexion du prolongement d'enfichage (42).

14. Appareil (10) selon une des revendications précédentes, comprenant un prolongement d'enfichage (42) ayant une première partie (52) et une deuxième partie (54), le prolongement d'enfichage (42) présentant un renfort longitudinal (70) qui est disposé dans la deuxième partie (54), le long de la direction axiale (A), et qui est conçu pour rendre plus rigide le prolongement d'enfichage (42), dans la deuxième partie (54).

15. Appareil (10) selon une des revendications précédentes, **caractérisé en ce que** le moyen d'arrêt à encliquetage (34) présente des ergots d'encliquetage (90) arrondis, chaque ergot d'encliquetage (90) pouvant être amené en prise avec une paroi d'encliquetage (68) et/ou un ergot d'encliquetage (90).
